# EUROPEAN PATENT SPECIFICATION

(11) **EP 3 147 192 B1**
(45) Date of publication and mention of the grant of the patent: **22.04.2020**
(21) Application number: 16186013.5
(22) Date of filing: 26.08.2016
(51) Int. Cl.: B62K 11/14, B62K 23/02

(54) **STRADDLE-TYPE ELECTRIC VEHICLE**
GRÄTSCHSITZELEKTROFAHRZEUG
VEHICULE ELECTRIQUE A ENFOURCHER

(30) Priority: 28.09.2015 JP 2015190156
(43) Date of publication of application: 29.03.2017
(73) Proprietor: Yamaha Hatsudoki Kabushiki Kaisha, Shizuoka-ken Shizuoka 438-8501 (JP)
(72) Inventor: Shimizu, Tsukasa, Shizuoka-ken, Shizuoka 438-8501 (JP); Shirazawa, Hideki, Shizuoka-ken, Shizuoka 438-8501 (JP); Obayashi, Fuminao, Shizuoka-ken, Shizuoka 438-8501 (JP)
(74) Representative: Moreland, David

(56) References cited:
- EP-A1- 2 682 330
- EP-A1- 2 772 384
- EP-A1- 2 799 274
- EP-A1- 2 799 275
- EP-A1- 2 871 126
- EP-A1- 2 910 400
- EP-A2- 0 531 200
- WO-A2-2008/095116
- US-A1- 2012 065 825
- US-A1- 2012 103 716

## Description

### FIELD OF INVENTION

The present invention relates to a straddle-type type vehicle, and particularly though not exclusively, to an electric vehicle that is driven using an electric motor.

### BACKGROUND TO INVENTION

Japanese Patent Laid-open Publication No.2015-089757 (YAMAHA MOTOR CO LTD) and WO2013/061484 (KAWASAKI HEAVY IND LTD) disclose a straddle-type electric vehicle using an electric motor as a driving source of the vehicle. The electric vehicle includes a control unit for outputting an instruction value in response to an operation by a driver for an accelerator operation member and an inverter for supplying a driving electric power to an electric motor in accordance with the instruction value (in WO2013/061484, the control unit is referred to as an "ECU"). In the vehicle disclosed in Japanese Patent Laid-open Publication No.2015-89757, a motor case for storing the electric motor is disposed below a battery case, and the inverter is located in the motor case. In the vehicle disclosed in WO2013/061484, a case for storing the inverter is disposed behind the battery case. WO2013/061484 further discloses that an operation member, such as a main key, a light switch, or the like, aside from the accelerator operation member, is connected to the control unit.

When the control unit is disposed in the case storing the inverter, the electric components can be put together within a smaller area. However, since many operation members of a straddle-type electric vehicle are provided to a steering handle, a long electric wire is necessary for connecting the operation members and the control unit when the control unit is located in the case storing the inverter. This makes troublesome work in laying the electric wire and increases the cost of the electric wire.

An object of at least one embodiment of at least one aspect of the present invention is to provide a straddle-type electric vehicle that can facilitate the work in laying an electric wire, and reduce the cost for the electric wire.

It is an object of at least one embodiment of at least one aspect of the present invention to obviate or at least mitigate one or more problems or disadvantages in the prior art.

EP 2 772 384 A1 discloses all of the features of the preamble of claim 1.

### SUMMARY OF INVENTION

Various aspects of the present invention are defined in the independent claims appended hereto. Some optional and/or preferred features are defined in the dependent claims appended hereto.

According to an aspect of the present invention there is provided a straddle-type electric vehicle according to the features of apended claim 1. The above described arrangement of the vehicle control unit is able to simplify the work in laying an electric wire and/or is able to prevent increase of a cost for the electric wire. This enables the distance between the operation member provided to the steering handle and the vehicle control unit to remain unchanged when the steering handle turns, and thus enables the electric wire to be easily shortened.
The straddle-type electric vehicle may further comprise a front fork on which the steering handle may be mounted. The vehicle control unit may be supported by the front fork.

The front fork may comprise a right suspension and a left suspension. The vehicle control unit may be positioned between the right suspension and the left suspension in a front view of the vehicle body. This may make it easier to support the vehicle control unit by both the right suspension and the left suspension. This can more readily improve the stability in supporting the vehicle control unit.

The vehicle control unit may be supported by the handlebar or steering handle.

The straddle-type electric vehicle may further comprise a meter control unit configured to control a meter indicating a state of running of the vehicle. The meter control unit and the vehicle control unit may be both supported by the front fork.

The vehicle control unit may be mounted on a substrate of the meter control unit. This can reduce the number of components.

The plurality of operation members may comprise at least one of a main switch for activating the vehicle control unit, a motor start switch, and a motor stop switch. The steering handle and the vehicle control unit may each or both be located higher than the motor driving unit.

The straddle-type electric vehicle may further comprise a first battery, preferably for storing an electric power to be supplied to the electric motor. The motor driving unit and/or the electric motor may be disposed below the first battery. The vehicle control unit may be disposed ahead of the first battery. This may enable one to shorten the electric wire that connects the motor driving unit and the electric motor and/or the electric wire that connects the operation member provided to the handlebar or steering handle and the vehicle control unit.

The straddle-type electric vehicle may comprise a first battery, preferably for storing an electric power to be supplied to the electric motor. The straddle-type electric vehicle may comprise a second battery, preferably for outputting a voltage which may be lower than that which is output by the first battery. The vehicle control unit may be connected to the second battery.

The second battery and the vehicle control unit may be positioned higher than the motor driving unit and/or may be electrically connected to each other. This may enable one to shorten the electric wire that connects the second battery and the vehicle control unit.

The second battery may be disposed outside the case having the motor driving unit disposed therein. This may make it easier to shorten the electric wire that connects the second battery and the vehicle control unit.

The straddle-type electric vehicle may further comprise a first battery, preferably for storing an electric power to be supplied to the electric motor. The first battery, the electric motor, and the motor driving unit may be disposed in a middle portion of the vehicle body. The vehicle control unit may be located apart forward from the first battery, the electric motor, and the motor driving unit. This layout can shorten an electric wire for a large electric current (specifically, the electric wire that connects the first battery and the motor driving unit and the electric wire that connects the motor driving unit and the electric motor). Further, this layout can shorten the electric wire that connects the vehicle control unit and the operation member provided to the handlebar or steering handle.

The straddle-type electric vehicle may comprise a case for storing the first battery. The straddle-type electric vehicle may comprise an electric wire, which may electrically connect the vehicle control unit and the motor driving unit to each other. The case having the motor driving unit disposed therein may be fixed to the case for storing the first battery. The electric wire may extend through inside of the case for storing the first battery to reach the motor driving unit. This can reduce a part of the electric wire that electrically connects the vehicle control unit and the motor driving unit that is exposed outside the vehicle body. This can obviate or mitigate against a rider or driver or an operator from unintentionally touching the electric wire.

The vehicle control unit may calculate the instruction value, e.g. on the basis of an operation of an operation member different from the accelerator operation member and/or a state of the vehicle detected by a sensor, in addition to the amount of operation of at least the accelerator operation member.

It will be appreciated that features analogous to those described in relation to the above aspect or optional features may be individually and separably or in combination applicable to any of the other aspects or optional features.

### BRIEF DESCRIPTION OF DRAWINGS

Embodiments of the present invention will now be described by way of example only, with reference to the accompanying drawings, which are:
- **FIG. 1**: a side view of an electric motorcycle, which is an example of a straddle-type electric vehicle according to an embodiment of the present invention;
- **FIG. 2**: a front view of the electric motorcycle;
- **FIG. 3**: a block diagram showing a structure of the electric motorcycle;
- **FIG. 4**: a side view showing a front portion of the electric motorcycle;
- **FIG. 5**: a front view showing a front portion of the electric motorcycle in which a front panel and a meter control unit are removed, and a vehicle control unit is shown;
- **FIG. 6**: a front view showing a front portion of the electric motorcycle, in which the meter control unit, not shown in FIG. 5, is shown;
- **FIG. 7**: a steering handle viewed from the back thereof; and
- **FIG. 8**: a modified example of an electric motorcycle according to an embodiment of the present invention, showing a front portion of a vehicle body, similar to FIG. 4.

### DETAILED DESCRIPTION OF EMBODIMENTS

An embodiment of the present invention will now be described, by way of example only, with reference to the accompanying drawings. It will be appreciated that the present invention is not limited to the following embodiment.

In the following, a straddle-type electric vehicle according to an embodiment of the present invention will be described. In this specification, an electric motorcycle will be described as one example of a straddle-type electric vehicle. The present invention may be applied to a straddle-type automobile or an automotive vehicle, or a straddle-type tricycle. The present specification describes an electric motorcycle of a type in which a battery for supplying an electric power to an electric motor to be described later is disposed at a relatively high position and the battery is positioned between the legs of a driver. However, the present invention may be applied to an electric motorcycle of a scooter type.

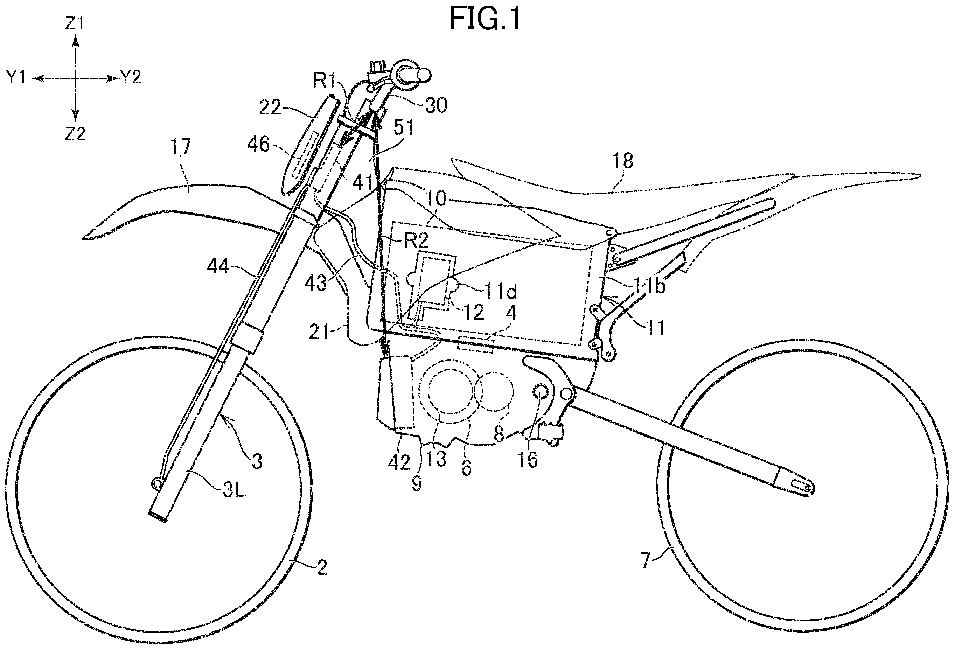

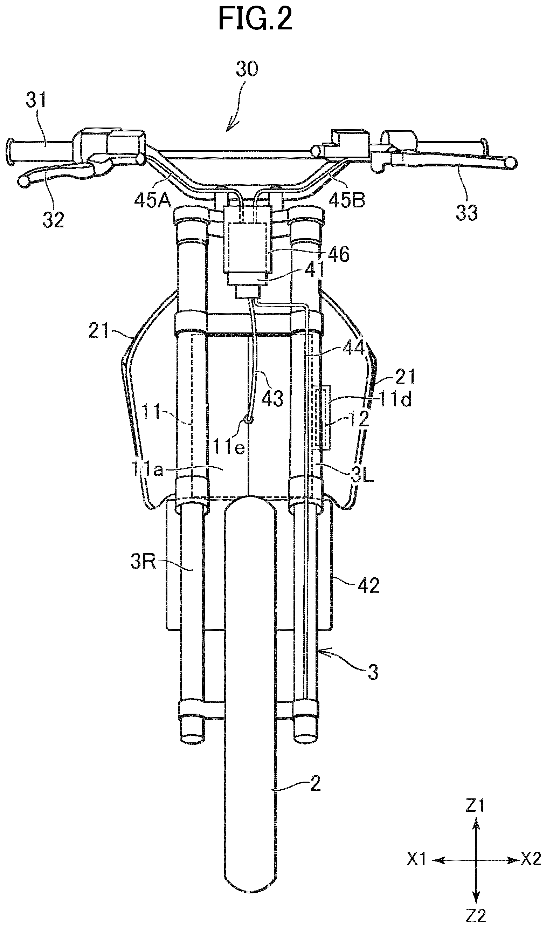

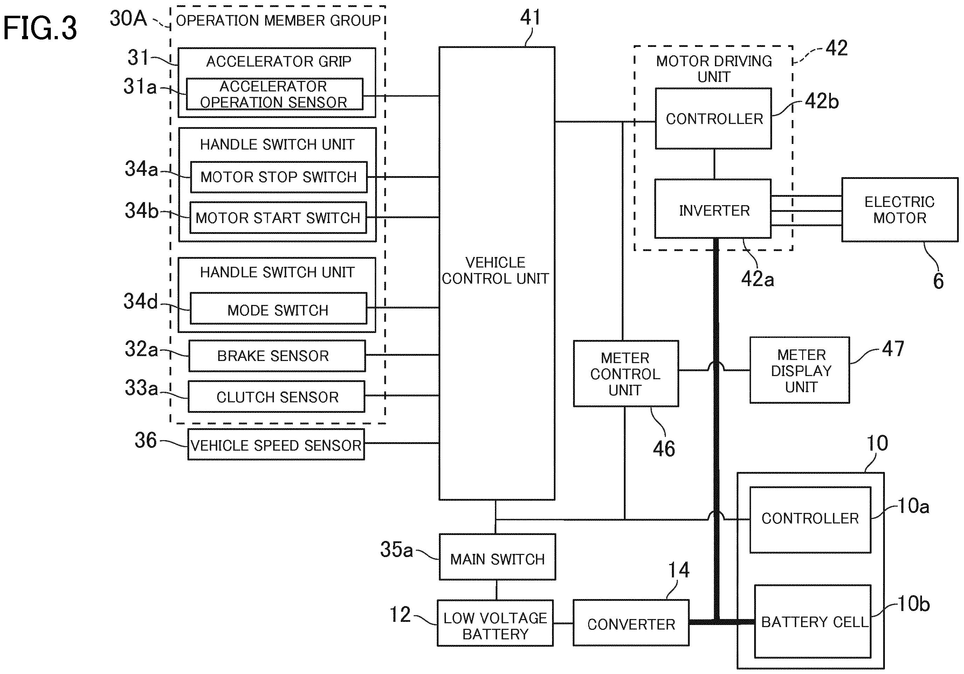

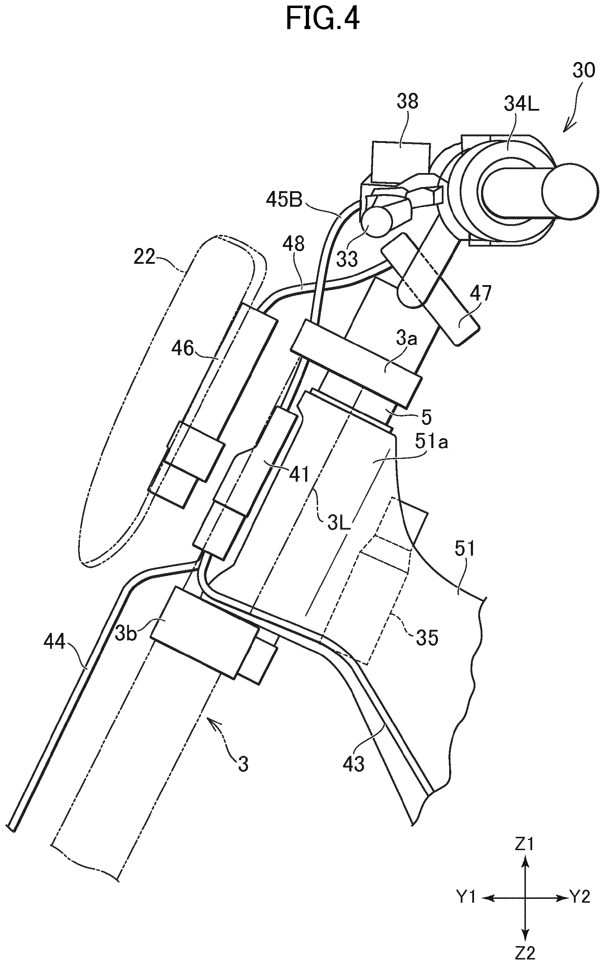

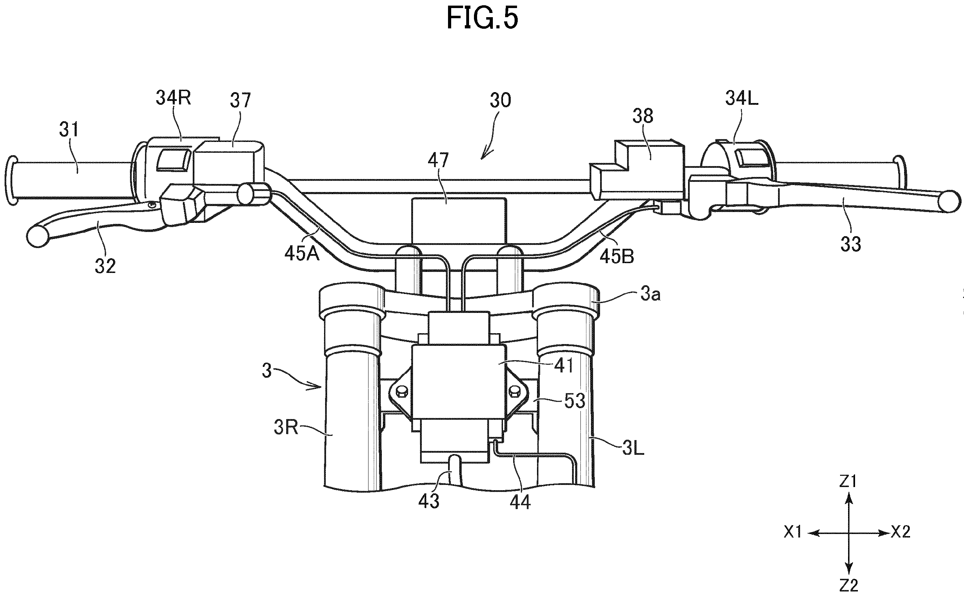

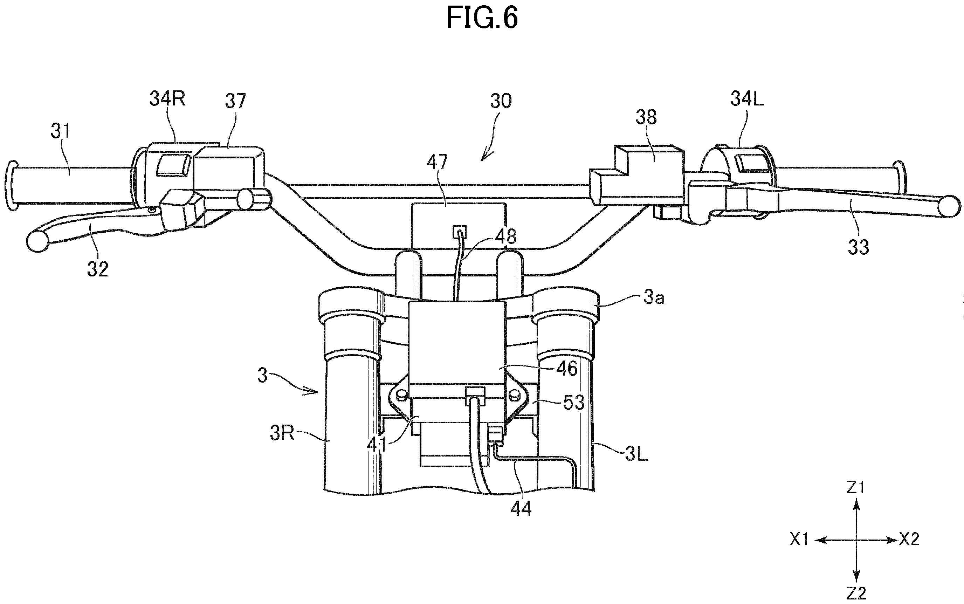

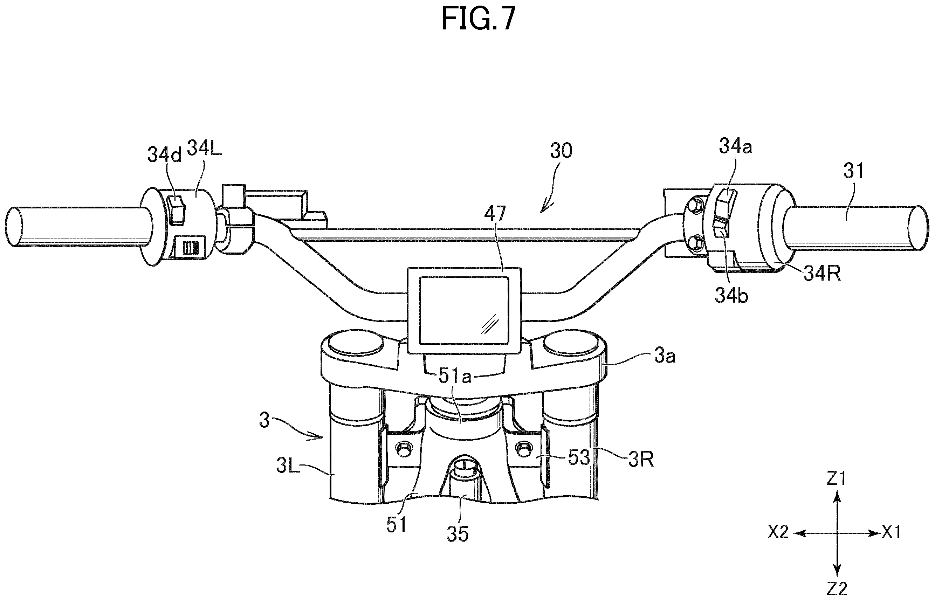

FIG. 1 is a side view of an electric motorcycle 1. FIG. 2 is a front view of the electric motorcycle 1. FIG. 3 is a block diagram showing a structure of the electric motorcycle 1. FIGS. 4 to 6 show a front portion of the electric motorcycle 1. FIG. 4 is a side view, and FIG. 5 is a front view. In FIG. 5, a front panel 22 and a meter control unit 46 to be described later are removed and thus a vehicle control unit 41 is shown. FIG. 6 is a front view. In FIG. 6, the meter control unit 46, removed in FIG. 5, is shown. FIG. 7 shows a steering handle 30 viewed from the back thereof.

In the description below, the arrows Y1 and Y2 shown in these diagrams indicate the forward and rearward directions, respectively, of the vehicle, those X1 and X2 indicate the rightward and leftward directions, respectively, of the vehicle, and those Z1 and Z2 indicate the upward and downward directions, respectively, of the vehicle. The direction indicated by the arrows X1-X2 is referred to as the vehicle width direction or the left-right direction.

As shown in FIG. 1, the electric motorcycle 1 has an electric motor 6 and a driving wheel that is driven by the electric motor 6. The electric motorcycle 1 comprises a rear wheel 7 as a driving wheel. A torque (rotation) of the electric motor 6 is transmitted to the rear wheel 7 via a deceleration mechanism 8 and a transmission member (not shown), such as a chain, a belt, a shaft, or the like. The deceleration mechanism 8 is made up of, for example, a plurality of gears. The electric motor 6 and the deceleration mechanism 8 are disposed in a drive mechanism case 9. A clutch mechanism 13 for transmitting a torque (rotation) or disconnecting the transmission may be disposed in the drive mechanism case 9. A rotation member 16 such as a sprocket or the like is disposed in the rear portion of the drive mechanism case 9. A transmission member such as a chain, a belt, a shaft or the like is connected to the rotation member 16.

As shown in FIG. 1, the electric motorcycle 1 has a battery 10 for storing an electric power to be supplied to the electric motorcycle 1. Further, the electric motorcycle 1 has a battery 12 for supplying an electric power at a voltage lower than that of an electric power from the battery 10 to the vehicle control unit 41, the meter control unit 46, or electric components such as a light (not shown), or the like. The vehicle control unit 41 and the meter control unit 46 will be described later in detail. In the following, the battery 10 will be referred to as a "high voltage battery", and the battery 12 as a "low voltage battery". The high voltage battery corresponds to a "first battery" in claims, and the "low voltage battery" to a "second battery" in claims.

The electric motorcycle 1 has a battery storage for storing the high voltage battery 10. As shown in FIG. 1, the electric motorcycle 1 comprises, as a battery storage, a battery case 11 having a front wall portion 11a (see FIG. 2), left and right side wall portions 11b, and a rear wall portion. The battery storage is not limited to the battery case 11. For example, the electric motorcycle 1 may comprise a right frame and a left frame that extend rearward from a head pipe 51a (see FIG. 4) provided to the foremost portion 51 of the vehicle body frame. In this case, the space between the right frame and the left frame may employed as a battery storage for the high voltage battery 10. In the example of the electric motorcycle 1, the battery case 11 is disposed behind the head pipe 51a, and at least a part of the head pipe 51a overlaps the battery case 11 in a front view of the vehicle body. As shown in FIG. 1, the battery case 11 may comprise a case cover 11g that is attached to the upper portion thereof and can be opened and closed. The battery 10 may be removable relative to the battery case 11. The electric motorcycle 1 has a seat 18 which a driver can straddle. In the example of the electric motorcycle 1, the battery case 11 is disposed below the front portion of the seat 18.

In the electric motorcycle 1, the battery case 11 constitutes a part of the vehicle body frame. Specifically, the rear end portion of the foremost portion 51 comprising the head pipe 51a is fixed to the front wall portion 11a of the battery case 11. A seat rail 52 for supporting the seat 18 is fixed to the rear portion of the battery case 11. The structure of the vehicle body frame of the electric motorcycle 1 is not limited to the above descried example. For example, a vehicle body frame may be provided separately from the battery case 11.

As shown in FIG. 1, the electric motorcycle 1 has a front wheel 2, a front fork 3, and a handlebar or steering handle 30. The steering handle 30 is attached to the upper end portion of the front fork 3. The front fork 3 supports the front wheel 2 on the lower end portion thereof, and is turnable leftward and rightward about a steering shaft 5 (see FIG. 4). The front wheel 2, the front fork 3, and the steering handle 30 integrally turn rightward and leftward in response to an operation of the steering handle 30 by a driver.

As shown in FIG. 2, an accelerator grip 31 is provided to an end portion (specifically, the right end portion) of the steering handle 30 (the accelerator grip 31 corresponds to an "accelerator operation member" in claims). A plurality of operation members are provided to the steering handle 30 besides the accelerator grip 31. One example of the operation member is a brake lever 32 for braking either one or both of the rear wheel 7 and the front wheel 2. Further, a clutch lever 33 for operating a clutch mechanism 13 may be provided to the steering handle 30.

Further, a plurality of operation switches for operation by a driver may be provided as the operation members. FIGS. 3 and 7 shows, as examples of the operation members, a motor stop switch 34a for stopping driving the electric motor 6, a motor start switch 34b for starting driving the electric motor 6, a mode switch 34d for switching control modes. The operation member provided to the steering handle 30 is not limited to the examples shown here. As shown in FIG. 7, the steering handle 30 comprises a switch assembly 34R on the right side thereof and a switch assembly 34L on the left side thereof. Some of the plurality of operation members (for example, the motor stop switch 34a, the motor start switch 34b, or the like) are provided to the switch assembly 34R, while the remaining of the plurality of operation members (for example, the mode switch 34d) is provided to the switch assembly 34L. Further, in the example of the electric motorcycle 1, the brake lever 32 and a brake device are connected to each other via a hydraulic path (not shown), and a master cylinder 37 of the hydraulic path is fixed to the steering handle 30. The clutch lever 33 and the clutch mechanism 13 are connected to each other via a hydraulic path (not shown), and a master cylinder 38 of the hydraulic path is fixed to the steering handle 30.

As shown in FIG. 3, the electric motorcycle 1 has a vehicle control unit 41 and a motor driving unit 42. The vehicle control unit 41 and the motor driving unit 42 are electrically connected to each other. For example, the vehicle control unit 41 and the motor driving unit 42 (more specifically, a controller 42b that constitutes the motor driving unit 42) is adapted to bidirectional communication according to a network standard such as CAN (Controller Area Network) or the like. The high voltage battery 10 comprises a battery cell 10b and a controller 10a. The controller 10a monitors the state (the remaining battery charge or temperature) of the battery cell 10b. The controller 10a, the vehicle control unit 41, and the motor driving unit 42 can communicate with each other. The vehicle control unit 41 detects the state of the battery cell 10b on the basis of the information from the controller 10a.

The vehicle control unit 41 is electrically connected to the operation members provided to the steering handle 30 to control the electric motor 6 and various electric components mounted on the vehicle body, on the basis of a signal from the operation members or the state of the vehicle (including the state of the battery 10) detected by a sensor or the like. In one example, the vehicle control unit 41 is electrically connected to the accelerator grip 31. In detail, the vehicle control unit 41 is connected to an accelerator operation sensor 31a provided to the accelerator grip 31. The vehicle control unit 41 determines the amount of operation (that is, a rotational position) on the basis of a signal from the accelerator operation sensor 31a (the amount of operation of the accelerator grip 31 will be hereinafter referred to as an "accelerator operation amount"). Then, the vehicle control unit 41 calculates an instruction value on the basis of at least the accelerator operation amount, and then outputs the instruction value to the motor driving unit 42. The motor driving unit 42 receives an electric power from the high voltage battery 10, and converts the electric power from the high voltage battery 10 into a driving electric power of the electric motor 6 in accordance with the instruction value (for example, a current), and supplies the driving electric power to the electric motor 6. The motor driving unit 42 comprises an inverter 42a and the controller 42b. For example, the motor driving unit 42 converts a DC from the high voltage battery 10 into an AC in accordance with the instruction value and supplies to the electric motor 6. The electric motor 6 is a three phase AC motor, for example, though the kind thereof is not limited to any specific one.

The vehicle control unit 41 may use information obtained from an operation member different from the accelerator grip 31 in calculation of the instruction value. That is, the vehicle control unit 41 may calculate the instruction value, on the basis of the accelerator operation amount and an operation of an operation member different from the accelerator grip 31 by a driver. For example, the mode switch 34d for a driver to switch the control mode of the electric motor 6 may be provided to the accelerator grip 31, and the vehicle control unit 41 may calculate the instruction value, on the basis of a signal from the mode switch 34d. A switch for switching a sport mode in which the electric motor 6 outputs a relatively large torque and a beginner mode in which the torque of the electric motor 6 is limited may be available as an example of the mode switch 34d. A switch for switching a manual mode in which shift positions (the 1st gear, the 2nd gear or the like) are changed in response to a manual operation by a driver and an automatic mode in which the shift positions are automatically changed may be available as another example of the mode switch 34d. The shift positions are achieved using a shifting system provided to a torque transmission path, for example. The shift positions may be spuriously achieved without using a shifting system. That is, information (for example, maps) indicating correlations between accelerator operation amounts and instruction values for the motor 6 may be defined to the plurality of shift positions, respectively, so that maps to use are switched to thereby change the shift positions.

In calculation of the instruction value, the vehicle control unit 41 may utilize the state of the vehicle (including the state of the high voltage battery 10) detected by a sensor or the like. That is, the vehicle control unit 41 may calculate the instruction value, on the basis of the state of the vehicle detected by a sensor in addition to the accelerator operation amount. For example, the vehicle control unit 41 may calculate the instruction value, on the basis of the state of the high voltage battery 10 detected on the basis of the information from the controller 10a of the high voltage battery 10 or the controller 42b of the motor driving unit 42. The state of the high voltage battery 10 includes the temperature of the battery cell 10b of the high voltage battery 10, the remaining battery charge, abnormality of the high voltage battery 10, or the like. In the case where the temperature of the battery cell 10b exceeds a threshold or the remaining battery charge is below a threshold, the vehicle control unit 41 calculates an instruction value that leads to decrease in the output of the electric motor 6.

As shown in FIG. 3, the vehicle control unit 41 is electrically connected to the brake lever 32. In detail, the vehicle control unit 41 is electrically connected to the brake sensor 32a provided to the brake lever 32. The vehicle control unit 41 detects the state of operation of the brake lever 32, on the basis of a signal from the brake sensor 32a. Then, when the brake lever 32 is operated, the vehicle control unit 41 causes a brake lamp (not shown) to light. The vehicle control unit 41 may execute regenerative control in accordance with the state of operation of the brake lever 32. That is, when the brake lever 32 is operated, the vehicle control unit 41 may control a converter or a relay (not shown) such that the high voltage battery 10 is charged using an electric power from the electric motor 6.

Further, the vehicle control unit 41 may be electrically connected to the clutch lever 33. In detail, the vehicle control unit 41 may be electrically connected to a clutch sensor 33a provided to the clutch lever 33. The sensor 33a is a switch, for example, for outputting an on/off signal depending on the state of operation of the clutch lever 33. Alternatively, the sensor 33a may be a position sensor that outputs an electric signal in accordance with the amount of operation (the position of the lever 33) of the clutch lever 33. The vehicle control unit 41 detects the state of operation of the clutch lever 33, on the basis of a signal from the clutch sensor 33a. Then, the vehicle control unit 41 may calculate the instruction value, on the basis of the state of operation of the clutch lever 33 in addition to the accelerator operation amount.

Further, the vehicle control unit 41 is electrically connected to the motor stop switch 34a and the motor start switch 34b. When a signal is input from the motor start switch 34b, the vehicle control unit 41 activates the motor driving unit 42, for example, to allow to supply an electric power from the motor driving unit 42 to the electric motor 6. When a signal is input from the motor stop switch 34a, the vehicle control unit 41 stops operation of the motor driving unit 42, for example, to stop supplying an electric power from the motor driving unit 42 to the electric motor 6. Further, the vehicle control unit 41 is connected to the above mentioned mode switch 34d and switches the control mode of the electric motor 6 on the basis of a signal from the mode switch 34d.

As shown in FIG. 3, the electric motorcycle 1 has the low voltage battery 12 that outputs a voltage lower than the voltage outputted by the high voltage battery 10. The output voltage of the low voltage battery 12 is 12 volts, for example. The vehicle control unit 41 and the meter control unit 46 to be described later work with an electric power supplied from the low voltage battery 12. The low voltage battery 12 is charged by the high voltage battery 10. The electric motorcycle 1 comprises a converter 14. An electric power from the high voltage battery 10 is supplied to the low voltage battery 12 after the voltage thereof is lowered by the converter 14.

As shown in FIG. 3, the electric motorcycle 1 has a main switch 35a. When the main switch 35a is in an on state, the low voltage battery 12 supplies an electric power to the vehicle control unit 41 and the meter control unit 46, which are thereby activated. The main switch 35a is provided to a key cylinder 35 (see FIGS. 4 and 7). The key cylinder 35 is provided under the steering handle 30, for example. In the example of the electric motorcycle 1, the key cylinder 35 is fixed on the foremost portion 51 of the vehicle body frame.

As described above, the operation members 31, 32, 33, 34a, 34b, 34d provided to the handlebar or steering handle 30 are electrically connected to the vehicle control unit 41 (these operation members provided to the steering handle 30 are collectively referred to as an operation member group 30A). That is, the plurality of operation members included in the operation member group 30A are respectively connected to the vehicle control unit 41 via a plurality of electric wires. As shown in FIG. 5, the electric motorcycle 1 comprises a plurality of harnesses 45A, 45B. Electric wires that connect the plurality of operation members included in the operation member group 30A and the vehicle control unit 41 are included in the harnesses 45A, 45B. In the example shown in FIG. 5, an operation member (specifically, the accelerator grip 31, the motor stop switch 34a, the motor start switch 34b, or the like) disposed on the right side of the steering handle 30 is connected to the vehicle control unit 41 via the electric wire of the harness 45A, while an operation member disposed on the left side of the steering handle 30 (for example, the clutch lever 33, the mode switch 34d, or the like) is connected to the vehicle control unit 41 via the electric wire of the harness 45B. Note that these electric wires may not be necessarily included in the harnesses 45A, 45B. Further, all or some of the plurality of operation members comprised in the operation member group 30A may be connected to the vehicle control unit 41 via an electric wire different from the wires included in the harnesses 45A, 45B.

As shown in FIG. 1, the electric motorcycle 1 comprises a harness 43. The motor driving unit 42 and the vehicle control unit 41 are connected to each other via the harness 43. The harness 43 comprises an electric wire for communication, for example, so that bidirectional communication is possible between the motor driving unit 42 and the vehicle control unit 41.

The electric motorcycle 1 comprises a case having the motor driving unit 42 disposed therein. As shown in FIG. 1, in the example of the electric motorcycle 1, the motor driving unit 42 is disposed in the drive mechanism case 9 in which the electric motor 6 is disposed. The above arrangement of the motor driving unit 42 can shorten the electric wire that connects the motor driving unit 42 and the electric motor 6. Further, the above arrangement needs no dedicated case for the motor driving unit 42 and thus can reduce the number of components of the vehicle body.

Preferably, the motor driving unit 42 is disposed so as to be partially exposed from the drive mechanism case 9. This arrangement can achieve effective cooling of the motor driving unit 42. In the example of the electric motorcycle 1, the motor driving unit 42 is mounted in the drive mechanism case 9 so that the front surface thereof is exposed from the drive mechanism case 9.

Arrangement of the motor driving unit 42 is not limited to the example shown in FIG. 1. For example, the motor driving unit 42 may be disposed in a case different from the drive mechanism case 9. In this case, the electric motorcycle 1 may comprise a dedicated case for arrangement of the motor driving unit 42. Alternatively, the electric motorcycle 1 may comprise a case where other electric components such as a converter 14 for lowering the voltage of the high voltage battery 10 or the like and the motor driving unit 42 are disposed.

The vehicle control unit 41 is disposed outside the case that has the motor driving unit 42 disposed therein. In the example of the electric motorcycle 1, the vehicle control unit 41 is disposed outside the drive mechanism case 9. As shown in FIG. 1, the distance R1 from the steering handle 30 to the vehicle control unit 41 (more specifically, the upper end of the vehicle control unit 41) is shorter than the distance R2 from the steering handle 30 to the motor driving unit 42 (more specifically, the upper end of the motor driving unit 42) in a side view of the vehicle body. This arrangement of the vehicle control unit 41 can shorten the electric wire that connects the operation member group 30A disposed on the steering handle 30 and the vehicle control unit 41. That is, the above arrangement of the vehicle control unit 41 can shorten the electric wires included in the harnesses 45A, 45B. Accordingly, it is possible to simplify the work in laying the electric wire and to reduce the cost for the electric wire. In the example of the electric motorcycle 1, the number of electric wires that connects the operation member group 30A provided to the steering handle 30 and the vehicle control unit 41 is larger than the number of electric wires that connect the motor driving unit 42 and the vehicle control unit 41, that is, the number of electric wires included in the harness 43. Accordingly, the above described arrangement of the vehicle control unit 41 can shorten many electric wires.

As described above, the steering handle 30 is turnable rightward and leftward about the steering shaft 5. Preferably, the vehicle control unit 41 is mounted at a portion that turns together with the steering handle 30. As shown in FIG. 6, in the example of the electric motorcycle 1, the vehicle control unit 41 is supported by the front fork 3. Accordingly, the distance between the operation member group 30A and the vehicle control unit 41 remains unchanged when the steering handle 30 turns. This makes it easier to shorten the electric wire connecting these (in the example of the electric motorcycle 1, the electric wires of the harnesses 45A, 45B).

In the example of the electric motorcycle 1, the vehicle control unit 41 is mounted on the upper portion of the front fork 3. Then, the vehicle control unit 41 is positioned above a front fender 17 that covers the front wheel 2. Accordingly, an electric wire that connects the operation member group 30A and the vehicle control unit 41 can be shorter than the electric wire that connects the vehicle control unit 41 and the motor driving unit 42. The vehicle control unit 41 is mounted on the front fork 3 via a bracket 53, for example (see FIG. 5).

As shown in FIG. 5, the front fork 3 has a right suspension 3R and a left suspension 3L. The vehicle control unit 41 is positioned between the right suspension 3R and the left suspension 3L in a front view of the vehicle body. The arrangement enables the vehicle control unit 41 to be supported by both of the two suspensions 3R, 3L. This makes it possible to improve stability in supporting the vehicle control unit 41. In the example of the electric motorcycle 1, the bracket 53 is provided extending over the two suspensions 3R, 3L. Then, the vehicle control unit 41 is fixed to the bracket 53. The front fork 3 includes an upper bracket 3a and a lower bracket 3b attached to the upper portion thereof for connecting the right suspension 3R and the left suspension 3L (see FIG. 4). As shown in FIG. 4, the vehicle control unit 41 is positioned between the upper bracket 3a and the lower bracket 3b in a side view of the vehicle body. Note that the structure for supporting the vehicle control unit 41 is not limited to the above described example. For example, the vehicle control unit 41 may be located on the lateral side of the front fork 3. That is, the vehicle control unit 41 may be located on the right side of and fixed to the right suspension 3R. Meanwhile, the vehicle control unit 41 may be located on the left side of and fixed to on the left suspension 3L. Further, the vehicle control unit 41 may be fixed to either one or both of the upper bracket 3a and the lower bracket 3b.

As shown in FIG. 4, the vehicle control unit 41 may be disposed such that at least a part thereof overlaps the front fork 3 (more specifically, the suspensions 3R, 3L) in a side view of the vehicle body. This makes it easier to dispose other components at a position ahead of the vehicle control unit 41. In the example of the electric motorcycle 1, the meter control unit 46 is disposed ahead of the vehicle control unit 41. Alternatively, a headlight may be disposed ahead of the vehicle control unit 41 instead. In the example of the electric motorcycle 1, in a side view of the vehicle body, the rear portion of the vehicle control unit 41 overlaps the suspensions 3R, 3L, and the front portion of the same is positioned more forward than the suspensions 3R, 3L. Alternatively, the vehicle control unit 41 may entirely overlap the suspensions 3R, 3L.

The motor driving unit 42 is positioned lower than the steering handle 30. In detail, the motor driving unit 42 is positioned lower than the high voltage battery 10. In other words, the motor driving unit 42 is disposed under the battery case 11. Meanwhile, the vehicle control unit 41 is positioned higher than the motor driving unit 42 and further forward than the battery case 11. Then, the distance R1 from the steering handle 30 to the vehicle control unit 41 is shorter than the distance R2 from the steering handle 30 to the motor driving unit 42.

In the example of the electric motorcycle 1, the vehicle control unit 41 is supported by the upper portion of the front fork 3, as described above. The position where the vehicle control unit 41 is mounted is not limited to one on the front fork 3.

As one example, which does not fall within the scope of the claimed invention the vehicle control unit 41 may be mounted on the vehicle body frame. In the example of the electric motorcycle 1, the vehicle body frame includes a foremost portion 51 having the head pipe 51a and positioned ahead of the battery case 11. The vehicle control unit 41 may be mounted on the foremost portion 51, in an embodiment which does not fall within the scope of the claimed invention. In this structure as well, the vehicle control unit 41 is positioned higher than the motor driving unit 42 and further forward than the battery case 11. Accordingly, the distance from the steering handle 30 to the vehicle control unit 41 is shorter than the distance from the steering handle 30 to the motor driving unit 42.

Alternatively, as another example, the vehicle control unit 41 may be mounted on the steering handle 30. In this structure as well, the vehicle control unit 41 is positioned higher than the motor driving unit 42 and more forward than the battery case 11. Accordingly, the distance from the steering handle 30 to the vehicle control unit 41 is shorter than the distance from the steering handle 30 to the motor driving unit 42.

As shown in FIG. 1, the high voltage battery 10, the motor driving unit 42, and the electric motor 6 are disposed on a middle portion of the vehicle body middle portion. Specifically, the high voltage battery 10, the motor driving unit 42, and the electric motor 6 are disposed below the front portion of the seat 18. In the example of the electric motorcycle 1, the battery case 11 that has the high voltage battery 10 disposed therein and the drive mechanism case 9 that has the motor driving unit 42 and the electric motor 6 disposed therein are located below the front portion of the seat 18. In detail, the rear portion of the battery case 11 and the rear portion of the drive mechanism case 9 are located below the front portion of the seat 18. The above described arrangement can shorten the electric wire for a large electric current. Specifically, the arrangement can shorten the electric wire (not shown) that connects the high voltage battery 10 and the motor driving unit 42 and the electric wire (not shown) that connects the motor driving unit 42 and the electric motor 6. Meanwhile, the vehicle control unit 41 is located apart forward from the high voltage battery 10, the motor driving unit 42, and the electric motor 6 in a side view of the vehicle body. In other words, the vehicle control unit 41 is located apart forward from the battery case 11 and the drive mechanism case 9. The arrangement of the vehicle control unit 41 can shorten the electric wire (in the example of the electric motorcycle 1, the electric wires of the harnesses 45A, 45B) that connects the vehicle control unit 41 and the operation member group 30A mounted on the steering handle 30.

In the example of the electric motorcycle 1, the motor driving unit 42 is positioned further forward than the electric motor 6 and the clutch mechanism 13. Thus, compared to a structure in which the motor driving unit 42 is positioned further rearward than the clutch mechanism 13 and the electric motor 6, it is possible to shorten the electric wire (the harness 43) that connects the motor driving unit 42 and the vehicle control unit 41.

The drive mechanism case 9 is disposed below and fixed to the battery case 11. As shown in FIG. 1, the harness 43 extends downward from the vehicle control unit 41 and then passes through inside the battery case 11 and the drive mechanism case 9 to reach the motor driving unit 42. As shown in FIG. 2, a hole 11e is formed on the battery case 11, and the harness 43 is inserted into the hole 11 e. In the example of the electric motorcycle 1, the hole 11e is formed on the front wall portion 11a of the battery case 11. The above described structure can reduce a part of the harness 43 that is exposed outside the vehicle body. Accordingly, it is possible to prevent a driver or an operator from unintentionally touching the harness 43.

The electric motorcycle 1 may comprise left and right vehicle body covers 21 that cover the side portions of the vehicle body, as shown in FIG. 1. Then, the vehicle cover 21 may comprise a part that extends forward beyond the battery case 11. In this case, as shown in FIG. 2, preferably, the harness 43 is disposed between the left and right vehicle body covers 21. This can reduce a part of the harness 43 that is exposed outside the vehicle body.

As described above, the vehicle control unit 41 is connected to the low voltage battery 12, and works with an electric power from the low voltage battery 12. As shown in FIG. 1, similar to the vehicle control unit 41, the low voltage battery 12 is positioned higher than the motor driving unit 42. This can shorten the electric wire that connects the low voltage battery 12 and the vehicle control unit 41. In the example of the electric motorcycle 1, the motor driving unit 42 is disposed in the drive mechanism case 9, as described above. Meanwhile, the low voltage battery 12 is disposed outside the drive mechanism case 9.

In the example of the electric motorcycle 1, the low voltage battery 12 is positioned on the lateral side of the high voltage battery 10 (see FIG. 2). In other words, the low voltage battery 12 overlaps the high voltage battery 10 in a side view of the vehicle body. This arrangement can shorten the electric wire that connects the low voltage battery 12 and the vehicle control unit 41, and also the electric wire that connects the low voltage battery 12 and the high voltage battery 10, compared to a structure in which, for example, the low voltage battery 12 is disposed behind or below the high voltage battery 10.

In the example of the electric motorcycle 1, the low voltage battery 12 is disposed inside the battery case 11. The battery case 11 has, in the side wall portion 11b thereof, a storage 11d projecting in the lateral direction. The low voltage battery 12 is disposed in the storage 11d.

The arrangement of the low voltage battery 12 is not limited to the example described above. In one example, the low voltage battery 12 may be disposed outside the battery case 11. Further, the low voltage battery 12 may be disposed below the high voltage battery 10 and above the electric motor 6. As still another example, the low voltage battery 12 may be disposed ahead of the high voltage battery 10.

As shown in FIG. 1, the low voltage battery 12 and the motor driving unit 42 are both disposed below and further rearward than the vehicle control unit 41. That is, the low voltage battery 12 and the motor driving unit 42 are both positioned in the substantially same direction from the vehicle control unit 41. This arrangement enables the harness 43 that connects the motor driving unit 42 and the vehicle control unit 41 to comprise the electric wire that connects the vehicle control unit 41 and the low voltage battery 12, that is, an electric wire for supplying an electric power of the low voltage battery 12 to the vehicle control unit 41.

In the example of the electric motorcycle 1, the low voltage battery 12 is disposed inside the battery case 11. Further, the harness 43 extends through the hole 11e formed on the battery case 11 toward the inside of the battery case 11. The electric wire that connects the vehicle control unit 41 and the low voltage battery 12 is included in the harness 43, and extends to the inside of the battery case 11 through the hole 11e. Then, the electric wire that connects the vehicle control unit 41 and the low voltage battery 12 is separated from the electric wire that connects the vehicle control unit 41 and the motor driving unit 42 in the battery case 11.

As described above, the low voltage battery 12 is connected to the high voltage battery 10 via the converter 14. As shown in FIG. 1, the converter 14 is positioned further rearward than the front end of the high voltage battery 10 and further forward than the rear end of the same in a side view of the vehicle body. More specifically, the converter 14 is disposed below the high voltage battery 10 and above the electric motor 6. In the example of the electric motorcycle 1, the converter 14 is stored in the drive mechanism case 9. The converter 14 may be disposed on the bottom portion of the battery case 11.

The electric motorcycle 1 comprises a meter display unit 47 (see FIG. 7) and the meter control unit 46 (see FIG. 6). The meter display unit 47 displays the vehicle speed, the remaining battery charge of the high voltage battery 10, or the like. The meter control unit 46 controls display of the meter display unit 47. The meter display unit 47 is mounted on the steering handle 30. The position where the meter display unit 47 is mounted and a structure for mounting the meter display unit 47 are not particularly limited to special ones, and the meter display unit 47 may be mounted on the foremost portion 51 of the vehicle body frame, for example.

The meter control unit 46 is supported by the upper portion of the front fork 3, similar to the vehicle control unit 41, for example. This layout facilitates electric connection between the meter control unit 46, the vehicle control unit 41, and the motor driving unit 42. For example, this layout can shorten the electric wire (not shown) that connects the meter control unit 46 and the vehicle control unit 41. Further, this layout enables the harness 43 to include the electric wire that connects the meter control unit 46 and the motor driving unit 42. Further, it is possible to shorten an electric wire 48 as well that connects the meter display unit 47 and the meter control unit 46 (see FIGS. 4 and 6). The position on the meter display unit 47 to which the electric wire 48 is connected and the position on the meter control unit 46 to which the electric wire 48 is connected are not limited to the examples shown in FIGS. 4 and 6, and may be desirably changed.

In the example of the electric motorcycle 1, the meter control unit 46 and the vehicle control unit 41 are aligned in the front-back direction. As shown in FIG. 4, the meter control unit 46 is disposed ahead of the vehicle control unit 41, for example. The arrangement of the meter control unit 46 and the vehicle control unit 41 is not limited to the above described. For example, the meter control unit 46 and the vehicle control unit 41 may be aligned in the left-right direction. As another example, the meter control unit 46 and the vehicle control unit 41 may be aligned in the up-down direction. As shown in FIG. 4 or the like, a structure in which the meter control unit 46 and the vehicle control unit 41 are separately formed enables vehicles of two different types to employ different settings for the vehicle control unit 41 while commonly using the meter control unit 46.

Alternatively, the meter control unit 46 and the vehicle control unit 41 may be integrally formed. For example, the vehicle control unit 41 may be mounted on a circuit board of the meter control unit 46. That is, electronic components that work as the vehicle control unit 41, such as a microprocessor, a memory, or the like may be mounted on the circuit board of the meter control unit 46. With the above, it is possible to reduce the number of components.

As shown in FIG. 4, the front panel 22 may be disposed ahead of the meter control unit 46 and the vehicle control unit 41 to cover the meter control unit 46 and the vehicle control unit 41. Instead of the example shown in FIG. 4, a headlight may be disposed ahead of the meter control unit 46 and the vehicle control unit 41.

As shown in FIG. 3, the electric motorcycle 1 comprises a vehicle speed sensor 36. In the example of the electric motorcycle 1, the vehicle speed sensor 36 is mounted on the axle of the front wheel 2. The vehicle control unit 41 and the vehicle speed sensor 36 are connected to each other via an electric wire 44. The meter control unit 46 receives the vehicle speed from the vehicle control unit 41. The electric wire 44 is supported by the front fork 3. Alternatively, the vehicle speed sensor 36 may be connected to the meter control unit 46 via the electric wire 44. Further, the vehicle speed sensor 36 may be connected to both of the meter control unit 46 and the vehicle control unit 41 via the electric wire 44. The vehicle control unit 41 can execute traction control, for example, utilizing the motor rotation speed and a signal from the vehicle speed sensor 36. That is, the vehicle control unit 41 compares the rotation speed of the rear wheel 7 calculated on the basis of the motor rotation speed and the rotation speed of the front wheel 2 calculated on the basis of a signal from the vehicle speed sensor 36, to control the torque of the electric motor 6 on the basis of the result of comparison. The motor rotation speed is calculated by the motor driving unit 42, on the basis of a signal from a magnetic position sensor mounted on the electric motor 6. In this case, the vehicle control unit 41 receives the motor rotation speed from the motor driving unit 42.

As described above, the vehicle control unit 41 is disposed outside the case in which the motor driving unit 42 is disposed. Then, the distance R1 from the steering handle 30 to the vehicle control unit 41 is shorter than the distance R2 from the steering handle 30 to the motor driving unit 42 in a side view of the vehicle body. This can shorten the electric wires that connect the operation member group 30A provided to the steering handle 30 and the vehicle control unit 41, that is, the electric wires included in the harness 45A, 45B in the example of the electric motorcycle 1. Accordingly, it is possible to simplify the work in laying the electric wires and also to reduce the cost for the electric wires.

The vehicle control unit 41 is supported by the front fork 3. This enables the distance between the operation member group 30A mounted on the steering handle 30 and the vehicle control unit 41 to remain unchanged when the steering handle 30 is rotated. Accordingly, this makes it easier to shorten the electric wire that connects the operation member group 30A and the vehicle control unit 41 (in the example of the electric motorcycle 1, the electric wire of the harness 45A, 45B).

Note that the present invention is not limited to the above described electric motorcycle 1, and can be modified in various manners.

For example, the present invention may be applied to an electric motorcycle of a scooter type. In this case, the high voltage battery 10 is disposed on a footboard on which a driver puts his/her foot, and the electric motor 6 and the motor driving unit 42 may be located behind the high voltage battery 10. In a vehicle of this type, the distance R1 from the steering handle 30 to the vehicle control unit 41 is shorter than the distance R2 from the steering handle 30 to the motor driving unit 42 in a side view of the vehicle body.

The vehicle control unit 41 may be supported by the vehicle body frame, rather than by the front fork 3. In this case, the vehicle control unit 41 may be mounted on the foremost portion 51 of the vehicle body frame, for example.

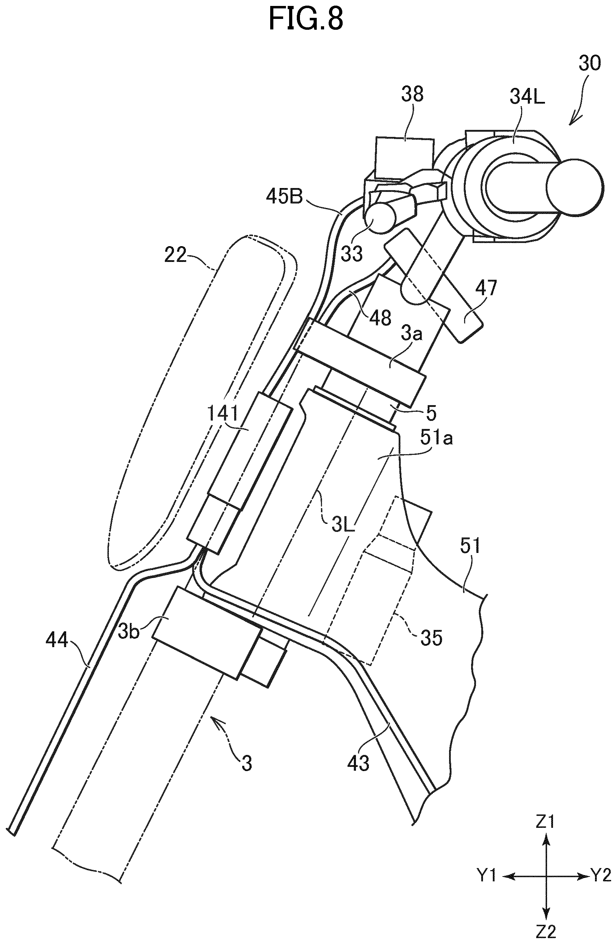

As described above, the meter control unit 46 and the vehicle control unit 41 may be integrally formed. FIG. 8 shows an example of this structure. The electric motorcycle in FIG. 8 comprises a vehicle control unit 141. The vehicle control unit 141 includes a circuit board that works as the above described meter control unit 46 and electronic components that work as the above described vehicle control unit 41, such as a microprocessor and a memory mounted on the circuit board. In the example shown as well, the vehicle control unit 141 is supported by the front fork 3.

It will be appreciated that the embodiment of the present invention hereinbefore described is given by way of example only, and is not intended to limit the scope of the invention in any way.

It will be appreciated that the term straddle-type vehicle, or electric vehicle used herein, and as used in the art, is meant to include at least the following terms also used in the art:
straddled vehicle or electric vehicle, saddle-straddling type vehicle or electric vehicle, and includes: motorcycles and motorbikes as well as motor tricycles, quad bikes and All Terrain Vehicles (ATVs), scooters, and mopeds.

## Claims

1. A straddle-type electric vehicle, such as an electric motorcycle (1), comprising:
a driving wheel;
an electric motor (6) for driving the driving wheel;
a plurality of operation members to be operated by a driver or rider, the plurality of operation members being mounted on a steering handle or handlebar (30) and comprising at least an accelerator operation member (31);
a vehicle control unit (41) electrically connected to the plurality of operation members and configured to output an instruction value, on the basis of an amount of operation of at least the accelerator operation member;
a motor driving unit (42) electrically connected to the vehicle control unit and configured to supply a driving electric power to the electric motor in accordance with the instruction value;
a case (9) having the motor driving unit disposed therein
; wherein
the vehicle control unit is disposed outside the case,
a distance from the steering handle to the vehicle control unit is shorter than a distance from the steering handle to the motor driving unit in a side view of a vehicle body,
the steering handle is supported so as to be operated by a driver and thereby turn rightward and leftward, and **characterized in that**
the vehicle control unit is mounted at a portion that turns together with the steering handle.

2. The straddle-type electric vehicle according to claim 1, further comprising a front fork (3)on which the steering handle is mounted, wherein
the vehicle control unit is supported by the front fork.

3. The straddle-type electric vehicle according to claim 2, wherein the front fork comprises a right suspension (3R) and a left suspension (3L);
the vehicle control unit is positioned between the right suspension and the left suspension in a front view of the vehicle body.

4. The straddle-type electric vehicle according to any preceding claim, wherein the vehicle control unit is supported by the steering handle.

5. The straddle-type electric vehicle according to any preceding claim, further comprising a meter control unit (46)configured to control a meter indicating a state of running of the vehicle, wherein
the meter control unit and the vehicle control unit are both supported by a/the front fork.

6. The straddle-type electric vehicle according to claim 5, wherein
the vehicle control unit is mounted on a substrate of the meter control unit.

7. The straddle-type electric vehicle according to any preceding claim, wherein the plurality of operation members comprise at least one of a main switch (35a) for activating the vehicle control unit, a motor start switch (34b), and a motor stop switch (34a).

8. The straddle-type electric vehicle according to any preceding claim, wherein the steering handle and the vehicle control unit are both located higher than the motor driving unit.

9. The straddle-type electric vehicle according to any of claims 1 to 8, further comprising:
a first battery (10) for storing an electric power to be supplied to the electric motor, wherein
the motor driving unit and the electric motor are disposed below the first battery, and
the vehicle control unit is disposed ahead of the first battery.

10. The straddle-type electric vehicle according to any of claims 1 to 9, further comprising
a/the first battery (10) for storing an electric power to be supplied to the electric motor, and
a second battery (12) for outputting a voltage lower than that which is output by the first battery, wherein
the vehicle control unit is connected to the second battery.

11. The straddle-type electric vehicle according to claim 10, wherein the second battery and the vehicle control unit are positioned higher than the motor driving unit and electrically connected to each other.

12. The straddle-type electric vehicle according to either of claims 10 or 11, wherein the second battery is disposed outside the case having the motor driving unit disposed therein.

13. The straddle-type electric vehicle according to any preceding claim, further comprising a/the first battery (10) for storing an electric power to be supplied to the electric motor, wherein
the first battery, the electric motor, and the motor driving unit are disposed in a middle portion of the vehicle body, and
the vehicle control unit is located apart from and forward of the first battery, the electric motor, and the motor driving unit, and optionally further comprising
a case (11) for storing the first battery; and
an electric wire electrically connecting the vehicle control unit and the motor driving unit to each other, wherein
the case having the motor driving unit disposed therein is fixed to the case for storing the first battery, and
the electric wire extends through inside of the case for storing the first battery to reach the motor driving unit.

14. The straddle-type electric vehicle according to any preceding claim, wherein the vehicle control unit calculates the instruction value, on the basis of an operation of an operation member different from the accelerator operation member and/or a state of the vehicle detected by a sensor, in addition to the amount of operation of at least the accelerator operation member.

## Patentansprüche

1. Reitsitz-Elektrofahrzeug, wie beispielsweise ein elektrische Motorrad, das Folgendes umfasst:
ein Antriebsrad,
einen Elektromotor (6) zum Antreiben des Antriebsrades,
mehrere Bedienelemente, die durch einen Führer oder Fahrer zu bedienen sind, wobei die mehreren Bedienelemente an einem Lenkgriff oder einer Lenkstange (30) angebracht sind und wenigstens ein Gaspedal-Bedienelement (31) umfassen,
eine Fahrzeug-Steuereinheit (41), die elektrisch mit den mehreren Bedienelementen verbunden und dafür konfiguriert ist, einen Anweisungswert auszugeben, auf der Grundlage eines Bedienausmaßes wenigstens des Gaspedal-Bedienelements,
eine Motorantriebseinheit (42), die elektrisch mit der Fahrzeug-Steuereinheit verbunden und dafür konfiguriert ist, dem Elektromotor eine Antriebselektroenergie entsprechend dem Anweisungswert zuzuführen,
ein Gehäuse (9), das die in demselben angeordnete Motorantriebseinheit aufweist, wobei
die Fahrzeug-Steuereinheit außerhalb des Gehäuses angeordnet ist,
in einer Seitenansicht eines Fahrzeugaufbaus eine Entfernung von dem Lenkgriff zu der Fahrzeug-Steuereinheit kürzer ist als eine Entfernung von dem Lenkgriff zu der Motorantriebseinheit, in einer Seitenansicht eines Fahrzeugaufbaus,
der Lenkgriff so getragen wird, dass er durch einen Fahrer bedient wird und sich dadurch nach rechts und nach links dreht, und **dadurch gekennzeichnet, dass**
die Fahrzeug-Steuereinheit an einem Abschnitt angebracht ist, der sich zusammen mit den Lenkgriff dreht.

2. Reitsitz-Elektrofahrzeug nach Anspruch 1, das ferner eine Vordergabel (3) umfasst, an welcher der Lenkgriff angebracht ist, wobei
die Fahrzeug-Steuereinheit durch die Vordergabel getragen wird.

3. Reitsitz-Elektrofahrzeug nach Anspruch 2, wobei
die Vordergabel eine rechte Aufhängung (3R) und eine linke Aufhängung (3L) umfasst,
in einer Vorderansicht des Fahrzeugaufbaus die Fahrzeug-Steuereinheit zwischen der rechten Aufhängung und der linken Aufhängung angeordnet ist.

4. Reitsitz-Elektrofahrzeug nach einem der vorhergehenden Ansprüche, wobei die Fahrzeug-Steuereinheit durch den Lenkgriff getragen wird.

5. Reitsitz-Elektrofahrzeug nach einem der vorhergehenden Ansprüche, das ferner eine Messinstrument-Steuereinheit (46) umfasst, die dafür konfiguriert ist, ein Messinstrument zu steuern, dass einen Fahrtzustand des Fahrzeugs anzeigt, wobei
die Messinstrument-Steuereinheit und die Fahrzeug-Steuereinheit beide durch eine/die Vordergabel getragen werden.

6. Reitsitz-Elektrofahrzeug nach Anspruch 5, wobei
die Fahrzeug-Steuereinheit an einem Substrat der Messinstrument-Steuereinheit angebracht ist.

7. Reitsitz-Elektrofahrzeug nach einem der vorhergehenden Ansprüche, wobei die mehreren Bedienelemente wenigstens eines von einem Hauptschalter (35a) zum Aktivieren der Fahrzeug-Steuereinheit, einem Motor-Startschalter (34) und einem Motor-Ausschalter (34a) umfassen.

8. Reitsitz-Elektrofahrzeug nach einem der vorhergehenden Ansprüche, wobei der Lenkgriff und die Fahrzeug-Steuereinheit beide höher angeordnet sind als die Motorantriebseinheit.

9. Reitsitz-Elektrofahrzeug nach einem der Ansprüche 1 bis 8, das ferner Folgendes umfasst:
eine erste Batterie (10) zum Speichern einer Elektroenergie, die dem Elektromotor zugeführt werden soll, wobei
die Motorantriebseinheit und der Elektromotor unterhalb der ersten Batterie angeordnet sind und
die Fahrzeug-Steuereinheit vor der ersten Batterie angeordnet ist.

10. Reitsitz-Elektrofahrzeug nach einem der Ansprüche 1 bis 9, das ferner Folgendes umfasst:
eine/die erste Batterie (10) zum Speichern einer Elektroenergie, die dem Elektromotor zugeführt werden soll, und
eine zweite Batterie (12) zum Abgeben einer Spannung, die niedriger ist als diejenige, die durch die erste Batterie abgegeben wird, wobei
die Fahrzeug-Steuereinheit mit der zweiten Batterie verbunden ist.

11. Reitsitz-Elektrofahrzeug nach Anspruch 10, wobei die zweite Batterie und die Fahrzeug-Steuereinheit höher als die Motorantriebseinheit angeordnet und elektrisch miteinander verbunden sind.

12. Reitsitz-Elektrofahrzeug nach einem der Ansprüche 10 oder 11, wobei die zweite Batterie außerhalb des Gehäuses angeordnet ist, das die in demselben angeordnete Motorantriebseinheit aufweist.

13. Reitsitz-Elektrofahrzeug nach einem der vorhergehenden Ansprüche, das ferner eine/die erste Batterie (10) zum Speichern einer Elektroenergie, die dem Elektromotor zugeführt werden soll, umfasst, wobei
die erste Batterie, der Elektromotor und die Motorantriebseinheit in einem mittleren Abschnitt des Fahrzeugaufbaus angeordnet sind und
die Fahrzeug-Steuereinheit entfernt von und vor der ersten Batterie, dem Elektromotor und der Motorantriebseinheit angeordnet ist, und das wahlweise ferner Folgendes umfasst:
ein Gehäuse (11) zum Aufbewahren der ersten Batterie und
ein elektrisches Kabel, das die Fahrzeug-Steuereinheit und die Motorantriebseinheit elektrisch miteinander verbindet, wobei
das Gehäuse, das die in demselben angeordnete Motorantriebseinheit aufweist, an dem Gehäuse zum Aufbewahren der ersten Batterie befestigt ist und
sich das elektrische Kabel durch die Innenseite des Gehäuses zum Aufbewahren der ersten Batterie erstreckt, um die Motorantriebseinheit zu erreichen.

14. Reitsitz-Elektrofahrzeug nach einem der vorhergehenden Ansprüche, wobei die Fahrzeug-Steuereinheit den Anweisungswert auf der Grundlage einer Bedienung eines von dem Gaspedal-Bedienelement verschiedenen Bedienelements und/oder eines durch einen Sensor erfassten Zustandes des Fahrzeugs, zusätzlich zu dem Bedienausmaß wenigstens des Gaspedal-Bedienelements, berechnet.

## Revendications

1. Véhicule électrique du type à enfourcher, par exemple un motocycle électrique (1), comprenant :
une roue motrice ;
un moteur électrique (6) pour entraîner la roue motrice ;
plusieurs éléments opérationnels destinés à être actionnés par un conducteur ou un motocycliste, les plusieurs éléments opérationnels étant montés sur une poignée de direction ou un guidon (30) et comprenant au moins un élément d'actionnement de l'accélérateur (31) ;
une unité de commande du véhicule (41) connectée électriquement aux plusieurs éléments opérationnels et configurée pour émettre une valeur d'instruction, sur la base d'une durée de fonctionnement d'au moins l'élément d'actionnement de l'accélérateur ;
une unité d'entraînement du moteur (42) connectée électriquement à l'unité de commande du véhicule et configurée pour transmettre une énergie électrique d'entraînement au moteur électrique en fonction de la valeur d'instruction ;
un carter (9) comportant l'unité d'entraînement du moteur qui y est disposée ; dans lequel :
l'unité de commande du véhicule est disposée à l'extérieur du carter, une distance entre la poignée de direction et l'unité de commande du véhicule étant inférieure à une distance entre la poignée de direction et l'unité d'entraînement du moteur dans une vue latérale d'une carrosserie du véhicule ;
la poignée de direction est supportée de sorte à être actionnée par un conducteur, afin de la tourner ainsi vers la droite et vers la gauche, et **caractérisé en ce que** :
l'unité de commande du véhicule est montée sur une partie tournant ensemble avec la poignée de direction.

2. Véhicule électrique du type à enfourcher selon la revendication 1, comprenant en outre une fourche avant (3) sur laquelle est montée la poignée de direction, l'unité de commande du véhicule étant supportée par la fourche avant.

3. Véhicule électrique du type à enfourcher selon la revendication 2, dans lequel :
la fourche avant comprend une suspension de droite (3R) et une suspension de gauche (3L) ;
l'unité de commande du véhicule est positionnée entre la suspension de droite et la suspension de gauche dans une vue frontale de la carrosserie du véhicule.

4. Véhicule électrique du type à enfourcher selon l'une quelconque des revendications précédentes, dans lequel l'unité de commande du véhicule est supportée par la poignée de direction.

5. Véhicule électrique du type à enfourcher selon l'une quelconque des revendications précédentes, comprenant en outre une unité de commande de compteur (46) configurée pour contrôler un compteur indiquant un état de roulement du véhicule, dans lequel :
l'unité de commande du compteur et l'unité de commande du véhicule sont toutes les deux supportées par une/la fourche avant.

6. Véhicule électrique du type à enfourcher selon la revendication 5, dans lequel :
l'unité de commande du véhicule est montée sur un substrat de l'unité de commande du compteur.

7. Véhicule électrique du type à enfourcher selon l'une quelconque des revendications précédentes, dans lequel les plusieurs éléments opérationnels comprennent au moins un interrupteur principal (35a) pour activer l'unité de commande du véhicule, un interrupteur de démarrage du moteur (34b) et un interrupteur d'arrêt du moteur (34a).

8. Véhicule électrique du type à enfourcher selon l'une quelconque des revendications précédentes, dans lequel la poignée de direction et l'unité de commande du véhicule sont toutes les deux disposées en un point plus haut que l'unité d'entraînement du moteur.

9. Véhicule électrique du type à enfourcher selon l'une quelconque des revendications 1 à 8, comprenant en outre :
une première batterie (10) pour stocker une énergie électrique devant être transférée vers le moteur électrique, dans lequel :
l'unité d'entraînement du moteur et le moteur électrique sont disposés au-dessous de la première batterie ; et
l'unité de commande du véhicule est disposée devant la première batterie.

10. Véhicule électrique du type à enfourcher selon l'une quelconque des revendications 1 à 9, comprenant en outre :
une/la première batterie (10) pour stocker une énergie électrique devant être transférée vers le moteur électrique ; et
une deuxième batterie (12) pour émettre une tension inférieure à celle émise par la première batterie, dans lequel :
l'unité de commande du véhicule est connectée à la deuxième batterie.

11. Véhicule électrique du type à enfourcher selon la revendication 10, dans lequel la deuxième batterie et l'unité de commande du véhicule sont positionnées en un point plus haut que l'unité d'entraînement du moteur et sont connectées électriquement l'une à l'autre.

12. Véhicule électrique du type à enfourcher selon les revendications 10 ou 11, dans lequel la deuxième batterie est disposée à l'extérieur du carter comportant l'unité d'entraînement du moteur qui y est disposée.

13. Véhicule électrique du type à enfourcher selon l'une quelconque des revendications précédentes, comprenant en outre une/la première batterie (10) pour stocker une énergie électrique devant être transférée vers le moteur électrique, dans lequel :
la première batterie, le moteur électrique et l'unité d'entraînement du moteur sont disposés dans une partie médiane de la carrosserie du véhicule ; et
l'unité de commande du véhicule est agencée à l'écart et à l'avant de la première batterie, du moteur électrique et de l'unité d'entraînement du moteur, et comprenant en outre optionnellement :
un carter (11) pour recevoir la première batterie ; et
un fil électrique connectant électriquement l'unité de commande du véhicule et l'unité d'entraînement du véhicule l'une à l'autre ; et
le fil électrique s'étend à travers l'intérieur du carter pour recevoir la première batterie de sorte à atteindre l'unité d'entraînement du moteur.

14. Véhicule électrique du type à enfourcher selon l'une quelconque des revendications précédentes, dans lequel l'unité de commande du véhicule calcule la valeur d'instruction, sur la base d'un fonctionnement d'un élément opérationnel différent de l'élément d'actionnement de l'accélérateur et/ou d'un état du véhicule détecté par un capteur, en plus de la durée de fonctionnement d'au moins l'élément d'actionnement de l'accélérateur.
